(19) Europäisches Patentamt
European Patent Office
Office européen des brevets

(11) EP 0 676 771 B1

(12) **EUROPEAN PATENT SPECIFICATION**

(45) Date of publication and mention
of the grant of the patent:
**10.09.1997 Bulletin 1997/37**

(51) Int Cl.$^6$: **G21C 3/62**, G21C 3/20,
G21C 19/44, C01B 21/06,
C01G 56/00

(21) Application number: **94929675.0**

(22) Date of filing: **18.10.1994**

(86) International application number:
**PCT/JP94/01745**

(87) International publication number:
**WO 95/11509 (27.04.1995 Gazette 1995/18)**

(54) **NUCLEAR FUEL CYCLE**

KERNKRAFTSTOFFZYCLUS

CYCLE DU COMBUSTIBLE NUCLEAIRE

(84) Designated Contracting States:
**FR**

(30) Priority: **22.10.1993 JP 265268/93**

(43) Date of publication of application:
**11.10.1995 Bulletin 1995/41**

(73) Proprietor: **Japan Atomic Energy Research
Institute
Chiyoda-ku, Tokyo 100 (JP)**

(72) Inventors:
• **HANDA, Muneo
Ibaraki-ken 312 (JP)**

• **KOBAYASHI, Fumiaki Annacs Tokai Village A-1
Naka-gun Ibaraki-ken 319-11 (JP)**
• **KATSUTA, Hiroji
Higashi-Ibaraki-gun Ibaraki-ken 311-31 (JP)**

(74) Representative: **Bouget, Lucien et al
Cabinet Lavoix
2, Place d'Estienne d'Orves
75441 Paris Cédex 09 (FR)**

(56) References cited:
**JP-A- 1 096 003       JP-A- 4 140 694
JP-A- 4 319 699       JP-A- 5 052 981
JP-A-61 286 788**

**Description**

TECHNICAL FIELD

This invention relates to the nuclear fuel cycle and, more particularly, to a nuclear fuel cycle for fast reactors and minor actinoids transmutation reactors that use nitride fuels and molten-salt hot pyrochemical reprocessing and group partitioning technology.

BACKGROUND ART

The only nuclear fuel cycle that is commercially used today in nuclear power generation is the combination of a light-water reactor and the wet Purex process. In this nuclear fuel cycle, the minor actinoids (hereunder sometimes abbreviated as MA) accumulated in fuels are partitioned together with nuclear fission products (hereunder sometimes abbreviated as FPs) in the reprocessing process and are projected to be stored after glass vitrification. However, neptunium-237 which is a typical MA has a very long half life (ca. $2 \times 10^6$ yr) and involves many problems that need be solved, including the securement of a site for geological disposal, public acceptance (PA) considerations and the establishment of downstream technologies. The light-water reactor has a conversion ratio of ca. 0.6 - 0.5. The nuclear fuel cycle depending on the combination of the light-water reactor and the Purex process has an inherent limitation on the effective utilization of uranium resources, which is held to be no more than ca 1%.

A new fuel cycle that is under development is one based on the combination of a uranium-plutonium mixed oxide fueled fast reactor and the Purex process. The purpose of its development is to reduce the fuel-cycle costs by enabling the reactor to be constructed at a cost not exceeding 1.5 times the cost for the light-water reactor and by achieving a higher burnup (10 - 15%). However, the fabrication of uranium-plutonium mixed oxide (hereunder sometimes abbreviated as MOX) fuels which contain $\alpha$-emitting plutonium requires that all complex steps of fabrication be carried out precisely within a glove box using an automated system and so far it has been held difficult to achieve even a fuel-cycle cost equivalent to that required for the light-water reactor. As a further problem, the new fuel cycle requires a fuel doubling time of 50 - 90 yr and the MOX fueled fast reactor which is theoretically a breeder reactor is not anticipated to perform as such in practical applications.

R&D efforts are in progress in the United States at the Argonne National Laboratory to develop a nuclear fuel cycle that depends on the combination of the metal fueled fast reactor and the pyrochemical reprocessing and partitioning technology. The metal fuel (uranium-plutonium-zirconium alloy) swells so much (ca. 10% in volume per 1% burnup) upon irradiation that it has so far been held difficult to achieve high burnups. However, the R&D efforts that continued for 20 years since the sixties revealed that high burnups of 10 - 15% could be achieved by using a low smear density of ca. 70% T.D. with sodium bonded fuel pins (the smear density is the weight of a unit length of fuel pin as divided by the volumes of the fuel and the thermal bonding agent and expressed in the percentage of the fuel's theoretical density, T.D.) (see Proc. Intern. on Conf. Reliable Fuels for Liq. Metal Reactors, Tucson, Arizona, Sept. 7 - 11, p. 4 - 76, 1986). The studied metal-fueled breeder reactor has a very hard neutron spectrum and is promising as a MA transmutation reactor since it is capable of efficient MA transmutation. The metal-fueled breeder reactor has also been demonstrated to have inherent stability. For details of this aspect, see Nucl. Eng. Design, 991, 287 (1986). The pyrometallurgical reprocessing technology based on the molten-salt extraction method which was developed in the sixties was later combined with a new process of molten-salt electrolysis to develop a highly economical pyrochemical reprocessing technology for metal fuels in the eighties (Proc. Fuel Reprocessing and Waste Management, Jackson, Wyoming, Aug. 26 - 29, vol. 2, p. 257, Am. Nucl. Soc., 1984). The improvements achieved by recent studies such as the controllability of the molten-salt electrolytic process and the development of a technology for separating alkali metals and alkaline earth metals from molten-salt electrolytes by means of zeolite adsorbents have led to the establishment of a partitioning technology on a laboratory scale. The fuel cycle under consideration permits substantial downsizing of fuel fabrication and reprocessing facilities and the capital cost is estimated to be about 20% of the cost in the MOX cycle, the sum of the capital cost and the operating and maintenance costs is estimated at about one third of the costs in the MOX fuel cycle whereas the materials cost (for fuels, cladding tubes, etc.) and the waste disposal cost are estimated to be comparable. Taken as a whole, the fuel-cycle cost is calculated to be about 60% of the total MOX fuel-cycle cost and hence is anticipated to be economically competitive with the fuel cycle of the light-water reactor. As a further advantage, the estimated fuel doubling time in the fuel cycle is 10 - 20 yr which is satisfactory for its use in breeder reactors, providing for a higher utilization of uranium resources that is calculated to be about 60 times the value as achieved in the fuel cycle of the light-water reactor. On the other hand, metal fuels, especially the plutonium metal powders, are more prone to burn by themselves than uranium metal and will catch fire upon contact with the air atmosphere even at room temperature. Most of the past accidents at plutonium processing plants are said to have occurred on account of the self-burning property of plutonium metal. Thus, the fuel cycle under consideration has problems to be solved in terms of the inherent safety of fuel processing and reprocessing/partitioning facilities.

Another fuel recycle that has been proposed to date is one for the high-temperature gas-cooled reactor. With the high-temperature gas-cooled reactor which uses coated particulate fuels, the temperature at the outlet for the helium gas coolant can be increased to as high as ca. 1000°C, thereby providing a potential heat efficiency of about 50 % and, at the same time, the heat produced can be utilized in chemical engineering fields other than power generation. The coated particulate fuels have uranium dioxide particles (ca. 0.6 mm in diameter) clad, in quadruplicate, with pyrolytic graphite and silicon carbide cladding layers so as to effect FP confinement. This mechanism of confinement is very rugged and provides an excellent style for the preservation and storage of once-through spent fuels. However, the efforts to develop an effective technology for reprocessing spent fuels have not so far proved successful. Therefore, the fuel cycle for the high-temperature gas-cooled reactor is yet to be established at the present stage.

From EP-A-0.307.311, is known a method of preparing an uranium mixed nitride to be used as nuclear fuel material. A method of recycling the thus obtained fuel material after it has been used in the core of a nuclear reactor is not provided. Moreover, a regeneration of the fuel by molten-salt electrolysis would not be easily handled due to the chemical form of the minor actinoids by-produced in the core of the reactor when operating.

## SUMMARY OF THE INVENTION

The present invention has been accomplished under these circumstances and has as an object providing a nuclear fuel cycle that is improved in the technical and economic aspects as exemplified by the inherent safety of nuclear reactors, the short doubling time of fuels and the high utilization of uranium resources.

Another object of the invention is to insure a high level for the inherent safety of the overall nuclear fuel cycle including fuel processing facilities, nuclear reactor, and reprocessing and partitioning facilities.

The present inventors conducted intensive studies with a view to attaining these objects of the invention and found that the first object could be achieved by replacing metal fuels with uranium-plutonium mixed nitride and minor actinoid nitride fuels which were by far chemically stabler than metals.

The present inventors also found that by adopting a reactor design that enabled the nitride fuels to exhibit their advantageous characteristics (e.g., large fuel element density, high melting point and high heat conductivity) to the fullest extent, not only could the fuel-cycle cost be reduced compared to those of MOX and metal fuels but better inherent safety could also be ensured for the overall fuel cycle.

The present inventors further found by thermodynamic analyses that the pyrochemical reprocessing and partitioning technology that used molten salts in chloride form and which was especially developed for application to metal fuels could also be applied to nitride fuels in such a way as to perform molten-salt electrolysis on uranium nitrides.

Therefore, in one aspect, the present invention provides a nuclear fuel containing an uranium-plutonium mixed nitride and characterized in that it further comprises at least a minor actinoid essentially in the form of a nitride.

In another aspect, the invention provides a sphere packed fuel pin that comprises a nuclear fuel containing an uranium-plutonium mixed nitride and characterized in that it further comprises at least a minor actinoid in the form of a nitride, as well as a sodium thermal bonding agent.

In still another aspect, the invention provides a method of cycling nuclear fuels for use in fast reactors and minor actinoid transmutation reactors, which comprises the steps of :

providing a sphere packed fuel pin that comprises a nuclear fuel comprised of an uranium-plutonium mixed nitride and a minor actinoid transmutation reactors, which comprises the steps of :
providing a sphere packed fuel pin that comprises a nuclear fuel comprised of an uranium-plutonium mixed nitride and a minor actinoid nitride, as well as a sodium thermal bonding agent ;
loading said fuel pin in the core of a reactor and burning said fuel ;
performing molten-salt electrolysis on the spent fuel ;
converting to higher nitrides the uranium, plutonium and minor actinoids that have deposited at the cathode ;
recovering said higher nitrides ;
converting the recovered higher nitrides to mononitrides ; and
preparing from said mononitrides a nuclear fuel comprised of a uranium-plutonium mixed nitride and a minor actinoid nitride.

## BRIEF DESCRIPTION OF THE DRAWINGS

Fig. 1 is a cross section of a fuel pin comprising a particulate nitride fuel as thermally bonded with sodium; and
Fig. 2 is a diagram showing schematically an apparatus for performing molten-salt electrolysis on uranium nitride.

DETAILED DESCRIPTION OF THE INVENTION

The term "minor actinoids (MA)" as used herein means those products that form as a result of the nuclear reaction between uranium-238 and the neutrons that are the fission products of uranium-235 and plutonium-239. Such minor actinoids are produced in only minor amounts but have extremely long half lives as in the case of transuranium elements including neptunium-237, americium-243 and curium-247. It should be noted that uranium and plutonium which are fuels are called "major actinoids" and not included in the category of MA.

Uranium-plutonium mixed nitride and minor actinoid (MA) nitride fuels can be handled not only in inert atmospheres such as argon gas but also within ordinary air-filled glove boxes in their solid state and, hence, are advantageous from both safety and economy viewpoints. It should also be stressed that by adopting a reactor design that enables the nitride fuels to exhibit their advantageous characteristics (e.g., large fuel element density, high melting point and high conductivity) to the fullest extent, not only can the fuel-cycle cost be reduced compared to those of MOX and metal fuels but better inherent safety can also be ensured for the overall fuel cycle.

On the pages that follow, the processing and ultimate burnup of the mixed nitride fuels, the fast reactor and the MA transmutation reactor and the reprocessing and partitioning technology are described with particular reference made to such aspects as technical feasibility, inherent safety and economy.

(1) Morphology, production process and ultimate burnup of nitride fuel pins

The fuel-cycle cost which accounts for about one third of the power cost decreases almost linearly to the increasing fuel burnup and, therefore, the burnup that can be expected from uranium-plutonium mixed nitride fuels is as important as their behavior under irradiation. In the United States, burnups of about 10% have been achieved with fuel pins that consist of mixed nitride fuel pellets packed in stainless steel cladding tubes using helium or sodium as a thermal bonding agent (Nucl. Technol., 63, 9, 1983). The mixed nitride fuel pellets currently used in Japan are heat-stabilized pellets having large pores (ca. 100 $\mu$m in diameter) in the interior. A burnup of about 5% has been achieved with helium-bonded fuel pins in which the fuel pellet density, pellet preformer density and smear density are adjusted to ca. 85% T.D., ca. 95% D.T. and ca. 75% T.D., respectively. However, as has been experienced by MOX fuel pins for use in fast reactors, the fuel pins of this common pellet morphology require that all stages of the processing of intense $\alpha$-emitting plutonium fuels be performed within glove boxes and, at the same time, the pellet diameter should be controlled with high precision to ensure good heat conduction. To meet these needs, not only finish working with a centerless grinder is usually required but complex procedures are also involved in the shaping of the fuel pellets. As a result, the fuel processing costs will increase to values that are estimated to be about four times as high as in the case of uranium dioxide fuels for use in light-water reactors. Therefore, it is generally held that in the foreseeable future the nitride fuel pins will not be economically competitive with metal fuel pins which are fabricated by injection molding.

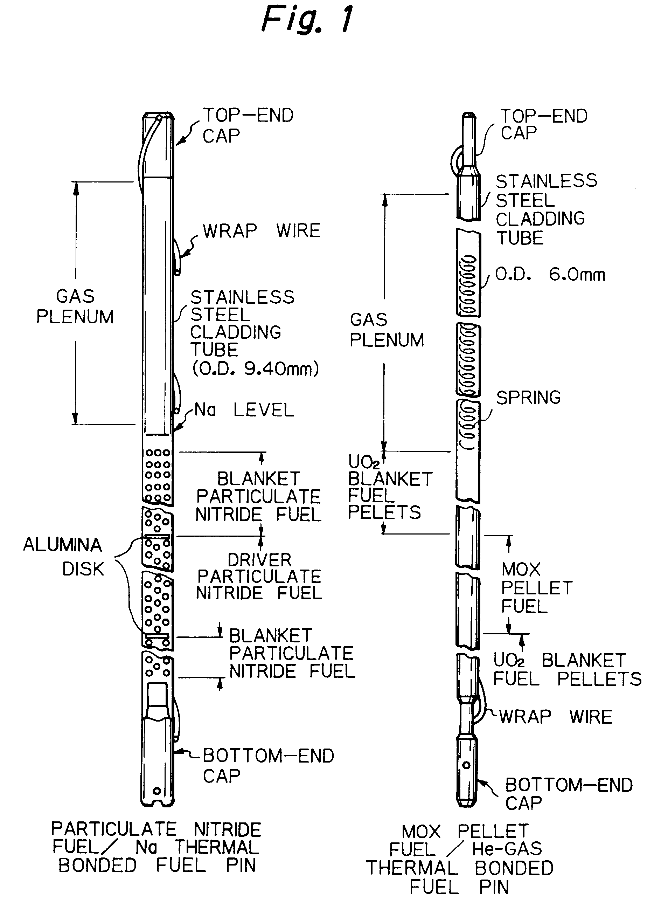

In order to solve these problems, particularly with a view to insuring fuel's smear densities of 75 - 80% T.D., the present invention uses a new sphere packed fuel pin of the type shown in the left-hand side of Fig. 1, in which nitride particles of two different diameters, one being in the range from about 0.05 to about 0.1 mm and the other in the range from about 0.5 to about 1.0 mm, are packed in a stainless steel cladding tube, with sodium being used as a thermal bonding agent (this type of fuel pin is hereunder designated as a "particulate nitride fuel-sodium bonded fuel pin"). For comparison, a standard MOX fuel pin for use in fast reactors is shown in the right-hand side of Fig. 1.

The nitride particles are spheres of a homogeneous fuel, which are not coated or otherwise treated. The fuel composition varies with the reactor in which the fuel is to be used and the purpose of its use but the following two cases are recognizable. The first case is where MA are mixed homogeneously throughout the fuel, typically in amounts of about 2 - 4%. This is not a very economical approach since all fuels have to be fabricated by remote and fully automated manipulation but, on the other hand, it is said to permit easy operation of reactors. The second case is that of a heterogeneous core fuel, in which a fuel containing 20 - 30% of MA is loaded to a fraction of the core of a reactor, with the remainder being loaded with the (U,Pu) N fuel. The Pu/Pu+U ratio is about 0.2 with large reactors but ranges from 20 to 70% with small-power reactors. The small number of MA containing fuel pins that have to be fabricated by remote manipulation provides a corresponding economic merit but, on the other hand, special considerations must accordingly be given to core design.

The production of nitrides will be elaborated later in this specification under section (7) and here the description is limited to the gelling process which is not touched upon in that section. In the gelling process, aqueous solutions of U, Pu and MA nitrates, ethylenetetramine and a carbon powder are mixed to form a gel solution having the respective ingredients dispersed therein and the thus prepared gel solution is dripped through a capillary tube to form liquid spheres. As the dropping liquid spheres are heated to about 500°C by the application of radio-frequency waves or microwaves, ethylenetetramine is decomposed to generate ammonia. The generated ammonia reacts with the fuel nitrates to form a mixture of solid ammonium biuranate, hydroxide, etc., thus producing solid spheres. Heating the solid spheres at 1700°C in a nitrogen stream yields the spheres of homogeneous mixed (U,Pu,MA) nitrides.

The process for fabricating the particulate nitride fuel-sodium bonded fuel pin to be used in the invention will proceed as follows, with all steps performed within a helium gas filled glove box. First, a stainless steel cladding tube having a stopper welded at the lower end is packed with a specified amount of sodium in the bottom. Subsequently, an anti-alpha contamination jig (not shown) is fitted at the inlet of the cladding tube and, thereafter, a blanket particulate nitride fuel, an alumina disk, a driver particulate nitride fuel, an alumina disk, and a blanket particulate nitride fuel are packed successively. After welding a stopper at the upper end, the fuel pin is wholly heated to a temperature of at least the melting point of sodium (90°C) as it is held in the erect position. The alumina disks serve to prevent the mixing of the blanket particulate nitride fuel with the driver particulate nitride fuel. To facilitate waste disposal, the alumina disks may be replaced with molybdenum disks.

This production process is very simple and suitable for remote manipulation. It is also characterized by not producing mold and other process wastes such as the quartz glass which occurs in large quantities in the injection molding process which is used to fabricate metal fuels. Therefore, the economy of fuel production by the process described above is anticipated to be comparable to or even better than that of the injection molding process which is adopted in the manufacture of metal fuels.

We will now discuss the ultimate burnup that can be achieved by the fuel pin of the invention. Since both the fuel and the thermal bonding agent used in the pin are made of materials having high heat conductivity, the center of the fuel can be held at 1300°C or below during irradiation. Thus, the pin is classified to fall in the category of "cold fuels" (which are so designed that their maximum temperature will not exceed about one third of their melting point so that the percent release of FP gases, the migration of FP through the fuel and other unwanted phenomena will be held to low levels) and, hence, a stable behavior under irradiation can be expected. The data of irradiation such as the release of fission gases, the swelling of fuels under irradiation and creep behavior that have been accumulated with heat stabilized fuel pins in Japan show that burnups of about 15% can be easily achieved if values of about 90% T.D. and 75% T.D. are adopted as the density of the particulate nitride fuel and the smear density of the fuel pin, respectively. Adopting the value of about 75% T.D. as the smear density of fuel pin will present no problem in fuel fabrication since it is not only supported by geometric calculations but also much experience of packing has accumulated for sphere packed fuel pins. It should be noted here that although a high burnup of about 15% can be achieved in fast reactors, the burnup that can be economically feasible with light-water reactors which use thermal neutrons is limited to 5 - 6% since the FPs in the form of rare earth elements such as samarium which build up in the fuel with the progress of burning have very large thermal neutron absorption cross sections. Therefore, the costs of processing fast reactor fuels which are about four times as high as the costs of processing light-water reactor fuels can be reduced in actual terms to four thirds of the costs for the latter after adjustment by the ultimate burnup that is increased by a factor of about three.

The fuel cost is greatly influenced by economics of particulate nitride fuel fabrication, which is dependent on various factors including the chemical form and shape of the fuel and MA that are recovered in the reprocessing and partitioning processes. Therefore, the discussion of an economical method for fabricating nitride fuel particles will be made after the description of those processes.

While the foregoing discussion is directed to uranium-plutonium mixed nitride fuels, no irradiation data are available for MA nitride fuels and making quantitative discussions is impossible at the present stage. However, considering that both fuel types have similar physico-chemical properties, one may well say that the conclusions formed with the mixed nitride fuels will substantially apply to the MA nitride fuels in qualitative terms.

(2) Fuel costs of nitride-fueled fast reactors (FR)

The fuel cost which is part of the nuclear fuel-cycle cost is divided into materials cost, processing cost and inspection cost. According to optimal design assessments for MOX, metal and nitride pins, the MOX fuels have high melting points but low thermal conductivities whereas the metal fuels have high thermal conductivities but low melting points and, therefore, an optimal pin diameter is evaluated to be 5 - 6 mm for both fuel types. The French demonstration fast reactor, Superphenix is exceptional and the outside diameter of the MOX fuel pins it uses is as large as 8.5 mm. However, this is a value for hollow fuel pellets and cannot be directly compared with the first mentioned values. In contrast, the nitride fuels have not only high melting points but also large heat conductivities and, hence, they permit the adoption of large fuel pins with diameters of 9 - 10 mm. An optimal linear power is 400 - 500 W/cm for both MOX and metal fuel pins and it is 800 - 1000 W/cm for nitride fuel pins. According to the recent data on the irradiation of pellet packed fuel pins, the ultimate burnups that can be achieved are in the range from 10 to 15% for the three kinds of fuels. The processing cost of metal fuels which adopt injection molding in fabrication has been estimated to be about 60% of the processing cost of MOX fuels (Genshiryoku Kogyo (Nuclear Engineering), vol. 33, No. 7, 1987). From these data, the following important results can be derived: 1) since the nitride fuels produce a linear power that is about twice the values achieved by the MOX and metal fuel pins, the number of nitride fuel pins that have to be loaded in the reactor core can be reduced to about one half the values required of the MOX and metal fuel pins and, therefore, the processing and inspection costs of the nitride fuel pins can accordingly be reduced to about one half the values for the MOX and metal fuel pins; 2) the three kinds of fuels can achieve substantially the same burnup and the nitride fuel pin has the fuel material packed in amounts about 2 - 2.5 times as large as in the case of MOX and metal fuel pins (in terms of the cross-sectional ratio of fuel pins; the burnup is expressed in MWD/T) and, hence, the energy that can be drawn from one nitride fuel pin is about 2 - 2.5 times as large as the value from one MOX or metal fuel pin; 3) the nitride fuel pin produces a linear power about twice as large as the value produced by the other fuel pin types and, hence, the time of residence in the core is almost the same for the three fuel types; 4) the requisite amounts of feed materials are substantially the same for the three fuel types; 5) in conclusion, the processing and inspection costs of the particulate nitride fuel-sodium bonded fuel pin to be used in the invention can be reduced to about one half the costs required of the metal fuels. From these results, it can be concluded that the processing and inspection costs of the fuel pin of the invention can be reduced to about one third of the costs required of the fuels for use in light-water reactors (LWR), as calculated in the following manner:

The processing and inspection costs of

particulate nitride fuel

= the processing and inspection costs of LWR fuel (= 1)

× the correction coefficient for plutonium processing (4)

× the correction coefficient for burnup

(LWR/FR = 5%/15% = 1/3)

× the correction coefficient for processing method

(injection molding = sphere packed particulate

fuel/pellet packed MOX fuel = 1/2)

× the correction coefficient for the number of fuel pins

(MOX fuel = metal fuel/nitride = 1/2)

= the processing and inspection costs of LWR fuel × 1/3.

(3) The inherent safety and fuel doubling time of uranium-plutonium mixed nitride fueled fast reactors

One may well say that the inherent safety of metal-fueled fast reactors has already been demonstrated in practically all aspects by the many published reports on the analyses of reactor physics and experimental data. See, for example, Proc. LMR: A Decade of LMR Progress and Promise, p. 236, Washington D.C. Nov. 11 - 15 (1990), which is a comparative study on the inherent safety of a metal-fueled fast reactor and a nitride-fueled fast reactor. The results of the study are as follows: a maximum fuel temperature during steady-state operation, the chemical and mechanical interactions between the fuel and the cladding tube, the melting point of fuel, and the margin of safety at a tolerable operating limit are much higher or greater in the nitride-fueled fast reactor than in the metal-fueled fast reactor; according to the results of accident analyses, the coolant peak temperature at unexpected low coolant flow with scram (ULOFWS) has a margin for safety that is the greatest with the nitride-fueled core, followed by the metal- and MOX-fueled core in the decreasing order, whereas the coolant peak temperature at unexpected top power with scram (UTOPWS) has a margin for safety that is the greatest with the MOX-fueled core, followed by the nitride- and metal-fueled core in the decreasing order; the overall rating, therefore is estimated to be the highest for the nitride-fueled core.

The doubling time of the nitride fuel is somewhat longer than that of the metal fuel if naturally occurring nitrogen is used (compared to the MOX fuel, the doubling time of the nitride fuel is much closer to that of the metal fuel) but a $^{15}$N enriched fuel has a shorter doubling time almost comparable to that of the metal fuel. For details of this point, see JAERI-M7374 (1977). Therefore, the $^{15}$N enriched fuel is capable of about 60% utilization of uranium resources which is comparable to the value achievable by the metal fuel.

(4) The pyrochemical reprocessing and partitioning of nitride fuels

While the processes for the pyrochemical reprocessing and partitioning of metal fuels which are under development by the Argonne National Laboratory in the United States have already been described above, no research studies have been reported on the method of pyrochemical reprocessing of nitride fuels using molten salts. According to D. L. Keller, US Report, BMI-1809 (1967), the electric resistances of uranium-plutonium mixed nitride fuels are substantially constant ($290 \sim 340 \times 10^{-6}$ $\Omega$cm) in the temperature range from RT to 900°C. These values are several tens of times as high as the values for copper ($2 \times 10^{-6}$ $\Omega$cm at RT) and iron ($10 \times 10^{-6}$ $\Omega$cm at RT). In other words, the uranium-plutonium mixed nitride fuels are almost the same as metals in terms of electric conductivity. Therefore, spent U-Pu mixed nitride fuels may be chopped, placed in a metallic basket and immediately used as anode.

Speaking of the molten electrolysis of nitrides, a patent application has already been filed on a process for producing plutonium and other actinoid metals without generating solid alpha-bearing process wastes [Unexamined Published Japanese Patent Application (kokai) No. Hei 5-59463]. The present inventors conducted thermodynamic analyses on the pyrochemical reprocessing and partitioning of nitride fuels using the molten-salt electrolysis method as contrasted with metal fuels and the results of these analyses are shown below. In the first place, the chemical forms of various FPs that were generated in the spent nitride fuels are described below as based on the data of the thermodynamic analyses and post-irradiation tests.

(4-1) The chemical forms of various FPs generated in nitride fuels

On the basis of the free energies of formation of uranium, plutonium and various FP nitrides and the data of tests conducted on irradiated fuels in a hot laboratory, the chemical forms of FPs in 10% burnup nitride fuels have been identified for major FPs that are produced in quantities of at least 0.09%. The results are shown below in Table 1.

Table 1

| Element (FP) | Quantity (at.%) | Chemical form |
|---|---|---|
| Ba | 0.31 | $Ba_3N_2$ |
| Ce | 0.59 | CeN |
| Cs | 0.91 | Cs, CsI, $CsTe_x$ |
| La | 0.28 | LaN |
| Mo | 1.02 | Mo |
| Nd | 0.69 | NdN |
| Pd | 0.65 | $(U,Pu)(Pd,Ru,Rh)_3$ |
| Pm | 0.09 | PmN |
| Pr | 0.23 | PrN |
| Rb | 0.11 | Rb, RbI |
| Rh | 0.27 | $(U,Pu)(Pd,Ru,Rh)_3$ |
| Ru | 1.01 | $(U,Pu)(Pd,Ru,Rh)_3$ |
| Sm | 0.16 | SmN |
| Sr | 0.12 | $Sr_3N_2$ |
| Tc | 0.29 | Tc |
| Te | 0.15 | Te, $CsTe_x$ |
| Xe | 1.07 | Xe |
| Y | 0.10 | Y |
| Zr | 0.97 | ZrN |

Table 1 lists only the FPs that are produced in quantities of 0.09 at.% or more.

The rare gas, alkali metals, technetium and tellurium exist in either the metallic, iodide or telluride form. In the following analyses, these FPs are assumed to be in the metallic form. Palladium, ruthenium and rhodium form alloys with uranium and plutonium. The alkaline earth elements, rare earth elements, zirconium and niobium exist in the form of stable nitrides.

Chlorides are preferred molten salts since they have high solubilities in the salts of U, Pu and MA. The chlorides may be composed of alkali metals such as Li, Na and K, or alkaline earth metals such as Ca, Mg and Ba, and the chlorides of these elements may be mixed in various proportions. The preferred proportions are determined in view of such factors as the required melting point and compatibility with the container of molten salts. A useful example is a mixture of 41% KCl and 69% LiCl.

(4-2) Pyrochemical reprocessing and partitioning of nitride fuels

To begin with, the pyrochemical reprocessing and partitioning of metal fuels using molten chlorides is described. The data that provides a basis for the following discussion is the free energy of formation $(\Delta G_f)$ of a chloride $MCl_x$ from a metal M, as defined in thermodynamics for chemical equation (1) given below. The free energy of formation $(\Delta G_f)$ and the voltage E required for electrolysis are correlated by equation (2) also given below. Hence, if electrolysis is conducted at a specified voltage, only the group of elements that will undergo electrolysis at that voltage can be recovered as metals at the cathode.

$$1/xM + c\ell = 1/xMcl_x \qquad (1)$$

$$\Delta G_f = -nFE \qquad (2)$$

where n is the equivalent number of electrons that are exchanged in the electrode reactions, and F is the Faradary constant. Since equation (1) is expressed in terms of the free energy of formation for the reaction involving one gram equivalent of chlorine (which is thermodynamically equal to the chlorine potential), various FPs, fuels such as uranium and plutonium, MAs and elements associated with pyrochemical treatments can be directly compared with one another as regards the progress or non-progress of electrolysis. The values of the free energy of formation $\Delta G_f$ (kcal/g-at.eq. Cl) at 1000K are listed in Table 2 below. In the pyrochemical reprocessing of metal fuels using molten chlorides, cadmium metal is used as anode; therefore, if a voltage is applied in such an amount that the electrolysis of curium chloride will proceed, FPs that have larger values of the free energy of formation than cadmium chloride will deposit at the anode whereas chlorides ranging from curium chloride to zirconium chloride will deposit at the cathode. Those FPs which have smaller values of the free energy of formation than yttrium chloride will remain in the molten salt electrolyte. Thus, the three kinds of species can be partitioned.

Table 2

*More prone to form salts from bottom to top*

| Salt phase | | Cathode phase | | Anode phase | |
|---|---|---|---|---|---|
| $BaCl_2$ | -83.4 | $CmCl_3$ | -58.8 | $CdCl_2$ | -30.4 |
| Kcl | -81.4 | $PuCl_3$ | -58.5 | $FeCl_2$ | -26.6 |
| RbCl | -81.2 | $MgCl_2$ | -57.7 | $NbCl_5$ | -24.6 |
| $SrCl_2$ | -81.0 | $NpCl_3$ | -54.1 | $MoCl_2$ | - 8.0 |
| CsCl | -80.0 | $UCl_3$ | -51.8 | $TcCl_3$ | - 7.0 |
| $SmCl_2$ | -80.0 | $ZrCl_2$ | -49.2 | RhCl | - 5.8 |
| LiCl | -78.8 | | | $PdCl_2$ | - 3.8 |
| $CaCl_2$ | -77.9 | | | $RuCl_3$ | - 1.4 |
| NaCl | -75.7 | | | | |
| $LaCl_3$ | -67.0 | | | | |
| $PrCl_3$ | -66.3 | | | | |
| $CeCl_3$ | -66.3 | | | | |
| $NdCl_3$ | -64.2 | | | | |
| $YCl_3$ | -61.2 | | | | |

*More prone to form metals from top to bottom*

Based on these preliminary data, we will now describe the pyrochemical reprocessing and partitioning of nitride fuels using molten salts. The reaction that provides a basis for the partitioning process is expressed by equation (3) below. The free energies of formation at 1000K were calculated by equation (3) for the chemical forms of U and Pu fuels, MAs and FPs in the irradiated nitride fuels which are listed in Table 1. Similar calculations were conducted by equation (4) for uranium-rhodium, uranium-palladium and uranium-ruthenium alloys. To perform those calculations, the values of the free energy of formation of chlorides, nitrides and alloys as expressed by equations (1), (5) and (6) must be known and the necessary data were replaced by the documented values listed in the references shown below.

$$1/xMN_y + Cl = 1/xMCl_x + y/xN \qquad (3)$$

$$1/3UA_3 + Cl = 1/3UCl_3 + A \qquad (4)$$

(where A is Rh, Ru or Pd)

$$M + xN = MN_x \qquad (5)$$

$$U + 3A = UA_3 \qquad (6)$$

Science of advanced LMFBRs, North-Holland, p. 690 (1986);
Metallurgical Thermo-Chemistry, Pergamon Press, 5th Ed. (1983);
Thermochemical Data for Reactor Materials and Fission Products, North-Holland (1990);
The Chemical Thermodynamics of Actinide Elements and Compounds, Part 5, The Actinide Binary Alloys, IAEA, Vienna (1981); and

The Chemical Thermodynamics of Actinide Elements and Compounds, Part 8, The Actinide Halides, IAEA, Vienna (1983).

The results are shown in Table 3, in which the values of the free energy of formation are expressed in kcal/g-at. eq. Cl.

Table 3

| Chloride | Free energy of formation |
|----------|--------------------------|
| KCl | -81.4 |
| RbCl | -81.2 |
| CsCl | -80.0 |
| $BaCl_2$ | -77.6 |
| NaCl | -75.7 |
| LiCl | -75.6 |
| $SrCl_2$ | -72.3 |
| $CaCl_2$ | -63.9 |
| $LaCl_3$ | -51.3 |
| $PrCl_3$ | -49.6 |
| $NdCl_3$ | -48.9 |
| $MgCl_2$ | -47.4 |
| $YCl_3$ | -45.7 |
| $CeCl_3$ | -45.6 |
| $PuCl_3$ | -42.2 |
| $URu_3(UCl_3)$* | -42.1 |
| $UCl_3$ | -35.3 |
| $URu_3(UCl_3)$* | -31.8 |
| $CdCl_2$ | -30.2 |
| $FeCl_2$ | -25.4 |
| $ZrCl_2$ | -16.8 |
| $NdCl_5$ | -17.0 |
| $UPd_3(UCl_3)$* | - 9.4 |
| $MoCl_2$ | - 8.0 |
| $TcCl_3$ | - 7.0 |

*$UCl_3$ is parenthesized in order to show that the indicated free energy is that of the formation of $URu_3$ or $UCl_3$, not relating to the reaction of $RuCl_3$ formation.

In the pyrochemical reprocessing and partitioning of nitride fuels, cadmium metal is not used as the anode and, therefore, if electrolysis is conducted at a voltage that allows plutonium metal to be deposited, those elements which have larger values of the free energy of reaction (3) than plutonium chloride will deposit together with uranium and plutonium fuels by the thermodynamic mechanism. However, palladium has a very small value of the free energy of reaction (4) and, hence, the free energy of formation expressed by equation (4) will so much increase that the reaction of interest might not proceed. In other words, these elements will dissolve only slightly in the electrolyte salt so that they will migrate from the anode to the cathode as slowly as palladium and ruthenium. Similar results are predictable with molybdenum and other elements that have large energies of reaction and formation. Zirconium has a small value of the free energy of the formation of nitrides as expressed by equation (5), so the free energy of formation of chlorides as expressed by equation (3) will increase to a comparable value to niobium; hence, both elements are assumed to behave in substantially the same fashion. It can therefore be concluded that in the pyrochemical reprocessing and partitioning of nitride fuels, the free energy of reaction and formation as expressed by equation (5) is generally greater than the free energy of the formation of chlorides from metals and that, therefore, excepting the palladium alloys and zirconium discussed above, all elements may be considered to behave in substantially the same fashion as those experienced by the pyrochemical reprocessing and partitioning of metal fuels.

The electrolyte conditions may be 450°C × 24 hr × 0.5 A/cm$^2$ × 2 V if the electrolyte consists of 41% KCl and 69% LiCl. In the present invention, it is important that the pyrochemical reprocessing of nitride fuels be conducted with voltage control being effected in close relation to such factors as FP deposition.

(5) Converting U, Pu and MA metals to higher nitrides after deposition and recovery at the cathode

One characteristic feature of the present invention is to insure the inherent safety of the fuel processing scheme by reducing the chance of handling fuels in the metallic form as much as possible compared to the metal fuel cycle. To this end, a spherical cathode having an orifice at the tip is used in molten salt electrolysis and nitrogen gas is constantly supplied into the system through a tubular cathode rod, whereby the metal fuel and MA that have been recovered on the electrode surface will be immediately converted to higher nitrides (uranium sesquinitride, plutonium sesquinitride and MA sesquinitrides). The powders of the resulting higher nitrides will settle on the bottom of the electrolytic cell and can be recovered together with the small amount of electrolyte salt by a batch process.

(6) Separation of powdered (U,Pu,MA) sesquinitrides, etc. from the electrolyte salt

The mixture of powdered (U,Pu,MA) higher nitrides and electrolyte salt that has been recovered from the electrolytic cell at 700°C is charged into an alumina crucible and the higher nitrides are roughly separated from the electrolyte salt by a gradient method. After adding water, the contents of the crucible are stirred so that the electrolyte salt dissolves out to separate from the U, Pu and MA higher nitrides. An alcohol is added to the salt-free nitride powder and the mixture is dehydrated by heating in vacuum at a temperature of about 100°C.

(7) Shaping the sesquinitride powder to a particulate nitride fuel and converting the latter to mononitride particles

A small amount of an organic or inorganic compound in the liquid form is added to the sesquinitride powder to form a sol, which is then shaped to a particulate form. An example of this process is described below but it should be understood that particulate fuels of the type under consideration can be produced by any known methods such as the process for producing the kernel of particulate uranium dioxide fuels for use in high-temperature gas-cooled reactors and the process for fabricating particulate nitride sphere-packed fuel pins for use in fast reactors.

The exemplary process starts with dripping the fuel sol down the tip of a capillary tube to form sol particles, which are subjected to high-frequency heating so that the additive is decomposed and evaporated away while, at the same time, the particles will gel. The resulting low-density sesquinitride particles are heated to 1300°C so that the higher nitrides will be converted to a particulate mononitride fuel (since the nitride fuels are used in the form of mononitride, all nitrides that have been discussed hereinabove shall be taken to mean "mononitrides" unless otherwise noted). The particulate mononitride fuel is then sintered by heating at a temperature of ca. 1700°C in a nitrogen-hydrogen mixed gas stream, whereby nitride particles of the desired density are produced. It should be added that from an economic viewpoint, the nitride fuels to be initially loaded in nuclear reactors are produced from oxides but as for the conversion of oxides to nitrides, a technology has already been established that is capable of low-cost production on an industrial scale by a one-stage reaction involving thermal reduction with carbon [see J. Nucl. Mater., 168, 280 (1989)]. In one applicable method, an oxide powder is mixed with a graphite powder and the mixture is compressed to form green pellets, which are then heated for several hours at ca. 1700°C in a nitrogen gas stream.

(8) Economy of the pyrochemical reprocessing and partitioning of particulate nitride fuels

As already mentioned herein, the fuel-cycle costs of pyrochemical reprocessing of metal fuels from fast reactors have been calculated to be about 60% of the costs of reprocessing MOX fuels by the Purex process (Genshiryoku Kogyo (Nuclear Engineering), vol. 33, No. 7, 66, 1987). These results may well be applied, without major errors, to the cycle of pyrochemical reprocessing of nitride fuels which is similar to the reprocessing of metal fuels in terms of fuel production and reprocessing schemes. In the absence of published reports, there is no way to assess the analysis on the economy of partitioning by wet and molten-salt pyrochemical processes; however, in view of the fact that the reprocessing and partitioning employ substantially the same technology, it may well be assumed that similar results will be obtained in the partitioning process.

Example

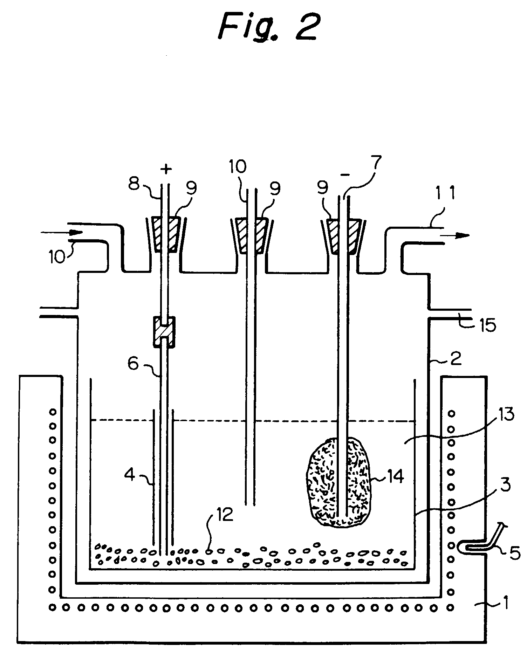

Uranium nitrides were subjected to electrolysis with a molten salt being used as electrolyte. The apparatus used in the experiment is shown in Fig. 2. The electrolysis was conducted in an alumina electrolytic cell container 3 installed within a quartz glass vessel 2. The cell 3 was heated with an electric furnace 1, which was temperature-controlled by means of a thermocouple 5. The anode was a graphite rod 6 connected to a metal rod 8 and the part of the graphite rod that was submerged in the molten salt was protected with a ceramic tube 4. The anode was a molybdenum rod 7. The quartz glass vessel 2 was fitted with an inlet 10 through which an inert gas would be supplied for bubbling the inner space of the vessel 2 and the molten salt in it, as well as with an outlet 11 through which the inert gas would be discharged. Argon was used as the inert gas. The anode, the cathode and the inlet for the inert bubbling gas were rendered airtight by means of rubber stoppers 9. Shown by 15 is the ground portion that serves to assure hermetic seal for the upper and lower parts of the quartz glass vessel 2.

The alumina cell container 3 was charged with 5 g of uranium nitride 12 and an electrolyte consisting of 41% KCl, 69% LiCl and 10 wt% $UCl_3$ and the temperature in the cell 3 was raised to 800°C under bubbling with the inert gas. Upon electrolysis at a current density of 2 $A/cm^2$, nitrogen gas evolved at the anode whereas uranium metal deposited at the cathode. It was therefore demonstrated that the pyrochemical reprocessing and partitioning of nitride fuels could be accomplished by engineering methods.

The present invention proposes a new fuel cycle that relies upon the pyrochemical reprocessing and partitioning of particular nitride fuels and this is based on the following various achievements: the adoption of nitride fuels that can be handled in the air atmosphere; the provision of particulate U,Pu-mixed nitride and MA fuel pins that can be fabricated by a simple process adapted for remote manipulation and which use sodium as a thermal bonding agent; the preparation of fuels that achieve burnups about three times as high as the values that can be achieved by uranium dioxide fuels used in light-water reactors; the reduction in the number of fuel pins to one half the value required under the same conditions of reactor design as the conventional MOX and metal fuels for use in fast reactors; the demonstration of the possibility that the pyrochemical reprocessing and partitioning technology in a mini-facility that has been developed for the metal fuels can be applied to nitride fuels; and the results of recent studies on the inherent safety of nitride fueled fast reactors. The present invention enables inherent safety to be assured not only for nuclear reactors but also for the overall fuel cycle. If the fuel fabrication facilities, the nuclear reactor and the reprocessing facilities are installed at the same site, the fuel transportation can be reduced markedly and the efficiency of anti-proliferation measures can also be significantly improved. The fuel-cycle cost of the pyrochemical reprocessing and partitioning of metal fuels from fast reactors is about 60% of the cost of reprocessing MOX fuels from fast reactors by the Purex process and the fuel-cycle cost of the present invention is even more competitive since the number of fuel pins that have to be loaded in the reactor is reduced by half and because the fuels can be processed in the air atmosphere. In conclusion, it is assumed that the fuel-cycle cost of the invention can be held below the level for light-water reactors and, consequently, one may as well say that practically all of the problems that prevent the commercial adoption of fast reactors and MA transmutation reactors have been solved.

## Claims

1. A nuclear fuel containing an uranium-plutonium mixed nitride characterized in that it further comprises at least a minor actinoid essentially in the form of a nitride.

2. A sphere packed fuel pin that comprises a nuclear fuel containing an uranium-plutonium mixed nitride characterized in that said nuclear fuel further comprises at least a minor actinoid essentially in the form of a nitride as well as a sodium thermal bonding agent.

3. A method of recycling nuclear fuels for use in fast reactors and minor actinoid transmutation reactors, which comprises the step of :

   providing a sphere packed fuel pin that comprises a nuclear fuel composed of an uranium plutonium mixed nitride and a minor actinoid nitride, as well as a sodium thermal bonding agent ;
   loading said fuel pin in the core of a reactor and burning said fuel ;
   performing molten-salt electrolysis on the spent fuel ;
   converting to nitrides the uranium, plutonium and minor actinoids that have deposited at the cathode;
   recovering said nitrides ;
   converting the recovered nitrides to mononitrides ; and
   preparing from said mononitrides a nuclear fuel comprised of an uranium-plutonium mixed nitride and a minor actinoid nitride.

4. A method according to claim 3, characterized in that nitrogen gas is supplied through a tubular cathode so that the uranium, plutonium and minor actinoids that have deposited on the cathode are converted to nitrides.

## Patentansprüche

1. Kernbrennstoff, der ein Uran-Plutonium-Mischnitrid enthält, dadurch gekennzeichnet, daß er weiterhin zumindest ein im wesentlichen in Form eines Nitrids vorliegendes Spurenactinoid aufweist.

2. Mit kugelförmigen Teilchen gefüllter Brennstoffstab, der einen ein Uranium-Plutonium-Mischnitrid enthaltenden Kernbrennstoff aufweist, dadurch gekennzeichnet, daß der Kernbrennstoff weiterhin zumindest ein Spurenactinoid aufweist, das im wesentlichen in Form eines Nitrids vorliegt, und ein Wärmebindungsmittel in Form von Natrium.

3. Verfahren zur Wiedergewinnung von Kernbrennstoffen zur Verwendung in Schnellreaktoren und Transmutationsreaktoren mit Spurenactinoiden mit den nachfolgenden Schritten:

Bereitstellen eines mit kugelförmigen Teilchen gefüllten Brennstoffstabs, der einen Kernbrennstoff aufweist, zusammengesetzt aus einem Uranium-Plutonium-Mischnitrid und einem Spurenactinoid in Form von Nitrid, alsauch ein Warmebindungsmittel in Form von Natrium;
Beladen des Brennstoffstabes in den Kern eines Reaktors und Verbrennen des Brennstoffs;
Durchführen einer Elektrolyse im geschmolzenen Salz am verbrauchten Brennstoff:
Umwandeln des Urans, des Plutoniums und der Spurenactinoide, die an der Kathode abgeschieden wurden, zu Nitriden;
Wiedergewinnen der Nitride;
Umwandeln der wiedergewonnenen Nitride zu Mononitriden; und
Herstellen eines Kernbrennstoffs aus den Mononitriden, der ein Uranium-Plutonium-Mischnitrid und ein Spurenactinoid in Form von Nitrid aufweist.

4. Verfahren nach Anspruch 3, dadurch gekennzeichnet, daß Stickstoffgas durch eine röhrenförmige Kathode zugeführt wird, sodaß das Uran, das Plutonium und die Spurenactinoide, die auf der Kathode abgelagert wurden, zu Nitriden umgewandelt werden.

**Revendications**

1. Combustible nucléaire contenant un nitrure mixte d'uranium et de plutonium, caractérisé en ce qu'il comprend en outre au moins un actinoïde mineur essentiellement sous la forme d'un nitrure.

2. Aiguille combustible à empilement de sphères, comprenant un combustible nucléaire contenant un nitrure mixte d'uranium et de plutonium, caractérisée en ce que ledit combustible nucléaire comprend en outre au moins un actinoïde mineur essentiellement sous la forme d'un nitrure, ainsi qu'un agent thermoconducteur de type sodium.

3. Procédé de recyclage de combustibles nucléaires destinés à être employés dans des réacteurs rapides et des réacteurs de transmutation d'actinoïde mineur, comprenant les étapes consistant :

à préparer une aiguille combustible à empilement de sphères, comprenant un combustible nucléaire composé d'un nitrure mixte d'uranium et de plutonium, et d'un nitrure d'actinoïde mineur, ainsi qu'un agent thermoconducteur de type sodium ;
à charger ladite aiguille combustible dans le coeur d'un réacteur, et à brûler ledit combustible ;
à effectuer une électrolyse en sel fondu du combustible usé ;
à convertir en nitrures, l'uranium, le plutonium et les actinoïdes mineurs qui se sont déposés à la cathode ;
à récupérer lesdits nitrures ;
à convertir les nitrures récupérés en mononitrures ; et
à préparer, à partir desdits mononitrures, un combustible nucléaire comprenant un nitrure mixte d'uranium et de plutonium, et un nitrure d'actinoïde mineur.

4. Procédé selon la revendication 3, caractérisé en ce que l'on fournit de l'azote gazeux à travers une cathode tubulaire de telle façon que l'uranium, le plutonium et les actinoïdes mineurs qui se sont déposés sur la cathode, soient convertis en nitrures.

# Fig. 1

PARTICULATE NITRIDE
FUEL / Na THERMAL
BONDED FUEL PIN

MOX PELLET
FUEL / He-GAS
THERMAL BONDED
FUEL PIN

Labels (left fuel pin): TOP-END CAP, WRAP WIRE, GAS PLENUM, STAINLESS STEEL CLADDING TUBE (O.D. 9.40mm), Na LEVEL, BLANKET PARTICULATE NITRIDE FUEL, DRIVER PARTICULATE NITRIDE FUEL, BLANKET PARTICULATE NITRIDE FUEL, ALUMINA DISK, BOTTOM-END CAP

Labels (right fuel pin): TOP-END CAP, STAINLESS STEEL CLADDING TUBE, O.D. 6.0mm, GAS PLENUM, SPRING, $UO_2$ BLANKET FUEL PELLETS, MOX PELLET FUEL, $UO_2$ BLANKET FUEL PELLETS, WRAP WIRE, BOTTOM-END CAP

# Fig. 2